Europäisches Patentamt

European Patent Office

Office européen des brevets

(19)

(11) Publication number: **0 113 989**
**A2**

(12)

# EUROPEAN PATENT APPLICATION

(21) Application number: 83307702.7

(22) Date of filing: 19.12.83

(51) Int. Cl.³: **A 23 L 1/221**, C 11 B 9/02, A 23 G 3/00

(30) Priority: 20.12.82 US 450811

(71) Applicant: **WARNER-LAMBERT COMPANY, 201 Tabor Road, Morris Plains New Jersey 07950 (US)**

(72) Inventor: **Blackwell, Bernie, 22-06 139th Avenue, Laurelton New York 11413 (US)**
Inventor: **Netherwood, Shelley, Raintree Apartments No. 2814 650 Tamarac Avenue, Brea California 92621 (US)**
Inventor: **Piccolo, Dominic Joseph, 292 19th Street, Brooklyn New York 11215 (US)**

(74) Representative: **Jones, Michael Raymond et al, HASELTINE LAKE & CO. 28 Southampton Buildings Chancery Lane, London WC2A 1AT (GB)**

(43) Date of publication of application: 25.07.84 Bulletin 84/30

(84) Designated Contracting States: BE CH DE FR GB LI NL

(54) Reduced-menthofuran-content peppermint oil flavoured compositions.

(57) There is disclosed a peppermint oil favloured chewing gum or confectionery composition, which comprises: a base support medium and, incorporated within the base support medium, in the range from 0.01% to 5.0% by weight of the final composition, of a reduced-menthofuran-content peppermint oil having a menthofuran content of below 2.0%, preferably in the range from 0.8% to 2%, more preferably 0.8% to 1.4%, by weight based on the weight of reduced-menthofuran-content peppermint oil. Processes for the preparation of the flavoured chewing gum and confectionery are also disclosed. The peppermint oil of the present invention demonstrates a significant increase in resistance to the formation of «off-note» characteristics.

-1-

# REDUCED-MENTHOFURAN-CONTENT PEPPERMINT OIL FLAVOURED COMPOSITIONS

The present invention relates to a reduced-menthofuran-content peppermint oil flavouring composition and is more particularly concerned with a reduced-menthofuran-content peppermint oil flavoured chewing gum and confectionery composition.

Peppermint oil is a well known flavouring agent derived from the leaves and flowering tops of the plant Mentha poperita L. The plants' habitat is quite diverse and it has been found in parts of Asia, Europe, and North America.

The peppermint oil constitutents vary depending upon the source of the plant although several main constituents are usually present. In general, peppermint oil contains varying amounts of alpha-pinene, beta-pinene, limonene, 1,8-cineole, menthone, menthofuran, isomenthol, menthyl acetate, neomenthol and menthol as well as various amounts of other constituents.

One advantage associated with the use of peppermint oil in the past has been its degradation during storage, resulting in a change in odour and flavour properties. Several studies have been undertaken to identify the aging characteristics of peppermint oil.

One study is described by R.H. Reitsema, et al. in Oxidation of Peppermint Oil, Industrial and Engineering Chemistry, Vol 44, page 176, January 1952, wherein three reactions which contribute to the aging process are described: the first reaction is the isomerization of terpenes which is described therein as having only minor importance; the second reaction involves the polymerization of the oil constituents which is noted as increasing the oils' molecular weight and the viscosity of the resulting product; and thirdly, the most important reaction, the oxidation of the peppermint oil which causes aging of the oil from a flavour standpoint. Specific components involved in the oxidation-aging process include the pinenes, limonene and menthofuran.

Various attempts have been made to inhibit the oxidation process to prevent the formation of oxidative by-products commonly referred to as "off-note" material. One conventional technique involves the use of anti-oxidants in the peppermint oil in an effort to inhibit the oxidation reactions from occurring. The use of such anti-oxidants, however, has not been successful since the anti-oxidants are either not effective in suppressing the oxidation reaction over prolonged storage periods or they have resulted in the formation of "off-note" peppermint oil detracting from the flavouring agent properties. These processes, at best, have merely attempted to suppress the formation of oxidation process by-products without removing from the oil the oxidisible constituents themselves.

Another study aimed at attempting to overcome the oxidation phenomenon is disclosed by Guenther in The Essential Oils, Vol III (1949), page 619. This reference discloses use of a fractional distillation technique to separate the peppermint oil flavour constituents from menthofuran. This technique was unsuccessful, however, since the menthofuran was codistilled with menthone, a major flavouring component of peppermint oil, thus rendering the recovered product unsuitable for use as a flavouring agent.

According to one aspect of the present invention there is provided a peppermint oil flavoured chewing gum or confectionery composition, which comprises: a base support medium and, incorporated within the base support medium, in the range from 0.01% to 5.0%, by weight of the final composition, of a reduced-menthofuran-content peppermint oil having a menthofuran content of below 2.0%, preferably in the range from 0.8% to 2%, more preferably 0.8% to 1.4%, by weight based on the weight of reduced-menthofuran-content peppermint oil.

The reduced-menthofuran-content peppermint oil employed in the present invention is prepared by: reacting a starting peppermint oil with an amount of maleic anhydride in the range from 0.5% to 15% by weight, based on the weight of starting peppermint oil, to selectively form a menthofuran-maleic anhydride adduct without otherwise affecting the flavouring properties of the remaining peppermint oil constituents; and subsequently recovering the reduced-menthofuran-content peppermint oil.

In accordance with the present invention, a reduced-menthofuran-content peppermint oil is incorporated into a conventional chewing gum formaulation or confectionery formulation. The reduced-menthofuran-content peppermint oil is incorporated into the base support medium of the respective formulation. The term "base support medium", as used herein, refers to the basic components which make up the particular chewing gum or confectionery formulation. For a chewing gum of the present invention the base support medium may comprise a chewing gum base. The amount of chewing gum base employed will vary greatly depending on various factors such as the type of base used, consistency desired and other components used to make the final product. Preferably, the amount of chewing gum will be present to an extent in the range from 5% to 45%, more preferably 15% to 25%, by weight, based on the weight of the final composition.

With regard to chewing gum formulations in particular, the chewing gum base employed in the present invention may comprise any water-insoluble gum base or mixture thereof. Illustrative examples of suitable gum bases include, without limitation: substances of vegetable origin such as chicle, jelutong, guttakay and crown gum; and synthetic elastimers such as butadiene-styrene copolymer, isobutylene-isopropene copolymer, polyethylene, polyisobutylene and polyvinylacetate.

Plasticisers or softeners, for example lanolin, stearic acid, sodium stearate, potassium stearate, glyceryl triacetate, or glycerin may also be incorporated into the chewing gum base to obtain desirable texture and consistency properties. Such materials are generally employed

-5-

in amounts of up to 30% by weight, preferably from 3 to 7% by weight of the final chewing gum base.

The chewing gum composition generally contains a sweetening agent or mixtures thereof. Sweetening agents may be selected from a wide range of materials, for example:

water-soluble sweetening agents, for example, monosaccharides, disaccharides and polysaccharides such as xylose, ribose, glucose, mannose, galactose, fructose, dextrose, sucrose, sugar, maltose, partially hydrolyzed starch, or corn syrup solids, and sugar alcohols such as sorbitol, xylitol, mannitol;

water-soluble artificial sweeteners, for example, the soluble saccharin salts, such as, sodium or calcium saccharin salts, acesulfam-K and the free acid form of saccharin; and

dipeptide based sweeteners, for example, L-aspartyl-L-phenylalanine methyl ester and materials described in U.S. patent No. 3,492,131.

In general, the amount of sweetener will vary. This amount will normally be in the range from 0.01% to 90% by weight, based on the weight of the final chewing gum composition, when using an easily extractable sweetener. The water-soluble sweeteners listed above are preferably employed in amounts of from 25% to 75% by weight, and more preferably from 50% to 65% by weight of the final chewing gum composition. In contrast, the artificial sweeteners listed above are employed in amounts of from 0.005% to 5.0% and more preferably from 0.05% to 2.5% by weight of the final chewing gum composition. These amounts are necessary to achieve a desired level of sweetness which is independent of the flavour level achieved from the peppermint oil.

The chewing gum of this invention may further contain additional conventional additives, including fillers such as calcium carbonate and talc; emulsifiers such as glyceryl monostearate and lecithin; colouring agents such as titanium dioxide; and other conventional chewing gum additives known to one skilled in the chewing gum art.

The amount of reduced-menthofuran-content peppermint oil employed in the chewing gums of the present invention is also a matter of preference, subject to such factors as strength desired and chewing gum base employed. In general, amounts in the range from 0.01% to 5% by weight of the final chewing gum composition have been found quite acceptable with amounts in the range from 0.1% to 2% being preferred and from 0.8% to 1.2% being most preferred.

According to another aspect of the present invention, there is provided a process for producing a flavoured chewing gum which process comprises:

admixing, preferably at a temperature in the range from 70°C to 120°C a chewing gum base with a reduced-menthofuran-content peppermint oil prepared by reacting a starting peppermint oil with an amount of maleic anhydride in the range from 0.5% to 15% by weight, based on the weight of starting peppermint oil, to selectively form a menthofuran-maleic anhydride adduct without otherwise affecting the flavouring properties of the remaining peppermint oil constituents and subsequently recovering the reduced-menthofuran-content peppermint oil;

continuing the mixing until a uniform mixture of gum base and flavouring is obtained; and

forming the mixture into suitable chewing

The reduced-menthofuran-content peppermint oil may be incorporated into an otherwise conventional chewing gum formulation using standard techniques and equipment known to those skilled in the art. In a typical embodiment the chewing gum base is blended with a plasticiser together with other additives, such as fillers and colouring agents, under heat to plasticise the blend as well as to modulate the hardness, viscoelasticity and formability of the base. The chewing gum base is then blended with the flavouring composition which may have been previously blended with other ingredients.

The chewing gums of the present invention may be in any form known in the art, such as stick gum, slab gum, chunk gum, shredded gum, hard coated gum, as well as centre-filled gum.

According to this aspect of the present invention, the reduced-menthofuran-content peppermint oil is present to an extent in the range from 0.01% to 5%, preferably 0.1% to 2%, more preferably 0.8% to 1.2% by weight, based on the weight of the final composition; and wherein the amount of chewing gum base is present to an extent in the range from 5% to 45% by weight, based on the weight of the final composition.

For a confectionery composition of the first aspect of the present invention, the base support medium may comprise a sweeteneing material, preferably present to an extent in the range from 5% to 99% by weight, based on the weight of the final composition. The amount of reduced-menthofuran-content peppermint oil present in the confectionery composition may be in the range from 0.05% to 1% by weight, based on the weight of the final composition.

The preparation of confectionery formulations is historically well known and has changed little through the years. In this regard, confectionery items have been classified as either the "hard" type or the "soft" type.

According to a further aspect of the present invention, there is provided a process for producing a flavoured confectionery base by heating and mixing together at an elevated temperature, the base support materials, and preferably, one or more additives;

cooling and kneading the mixture to a temperature below 120°C;

admixing into the confectionery base an amount of reduced-menthofuran-content peppermint oil prepared by reacting a starting peppermint oil with an amount of maleic anhydride in the range from 0.5% to 15% by weight, based on the weight of staring peppermint oil, to selectively form a menthofuran-maleic anhydride adduct without otherwise affecting the flavouring properties of the remaining peppermint oil constituents and subsequently recovering the reduced-menthofuran-content peppermint oil; and

forming the resulting mixture into a suitable confectionery shape.

In this embodiment, the amount of a reduced-menthofuran-content peppermint oil is present to an extent in the range from 0.01% to 5%, by weight, based on the weight of the final composition; and wherein the amount of base support is present to an extent of in the range from 5% to 99% by weight, based on the weight of the final composition.

The preparation of soft confections, such as nougat, involves conventional methods, such as the combination of two primary components, namely (1) a high boiling-point syrup, for example, corn syrup and (2) a relatively light textured frappé, prepared, for example, from gelatin, egg albumen, milk proteins such as casein and vegetable proteins such as soy protein.

The frappé is generally relatively light, and may, for example, range in density from about 0.5 to about $0.7g/cm^3$.

The high boiling-point syrup of the soft confectionery is relatively viscous and possesses a higher density, and frequently contains a substantial amount of sugar.

Conventionally, the final nougat composition is prepared by the addition of the high boiling-point syrup to the frappé, under agitiation, to form the basic nougat mixture. Further ingredients, for example, the reduced-menthofuran-content peppermint oil, flavouring, additional sugar colourants, preservatives, medicaments, and mixtures thereof may be added thereafter, also under agitation. A general discussion of the composition and preparation of nougat confections may be found in B.W. Minifie, CHOCOLATE, COCOA AND CONFECTIONERY: Science and Technology, 2nd Edition, AVI Publishing Co., Inc., Westport, Connecticut (1980), pages 424-425.

The procedure for preparing the "soft" confectionery involves known procedures. In general, the frappe component is prepared first and thereafter the syrup component is slowly added under agitation at a temperature of at least 65°C, and preferably at least 100°C. The components are continued to be mixed to form a unifrom mixture, after which the mixture is cooled to a temperature below 80°C at which point the reduced-menthofuran-content peppermint oil may be added. The mixture is further mixed for an additional period at which point it is ready for removal and formation into suitable confectionery shapes.

Similar to the soft confectionery, hard confectionery may be utilised in this invention and it may be processed and formulated by conventional means. In general, a hard confectionery has a base support medium composed of a mixture of cane or beet sugar and glucose syrup, low moisture levels from 0.5% to 1.5%, and the base support medium may be present in the final confectionery in amounts of from 5% to 99% by weight of the final composition. Such confectionery amy be routinely prepared by conventional methods, such as those involving fire cookers, vacuum cookers and scraped-surface cookers also referred to as high speed atmospheric cookers.

Fire cookers involve the traditional method of making candy base. In this method the desired quantity of sugar is dissolved in water by heating in a kettle until the sugar dissolves. Corn syrup or an invert sugar is then added and cooking continued until a final temperature of 140°C to 156°C is achieved. The batch is then cooled and worked as a plastic-like mass to incorporate additives.

A high speed atmospheric cooker uses a heat exchanger surface which involves spreading a film of candy on a heat exchange surface, the candy is heated to 165°C to 170°C in a few minutes. The candy is then rapidly cooled to 100°C to 120°C and worked as a plastic-like mass enabling incorporation of the additives, such as flavour, colour, acidulents, and medicaments.

In vacuum cookers, the sugar and corn syrup are boiled to 125°C to 132°C and vacuum applied and additional water is boiled off without extra heating. When cooking is complete, the mass is a semi-solid, having a plastic-like consistency. As this point colour, flavours and other additives are mixed in the mass by routine mechanical mixing operations.

The optimum mixing required to uniformly mix the flavour, colour and other additives during conventional manufacturing of hard confectionery is determined by the time needed to obtain a uniform distribution of the materials. Normally, mixing times of 4 to 10 minutes have been found acceptable.

Once the candy mass has been properly tempered it may be cut into workable portions or formed into desired shapes. A general discussion of the composition and preparation of hard confections may be found in H.A. Lieberman, Pharmaceutical Dosage Forms: Tablets Vol 1 (1980), Marcel Dekker, Inc. pages 339 to 469.

It should be mentioned that the apparatus used in accordance with the present invention comprises those cooking and mixing apparatus well known in the confectionery manufacturing arts, and therefore the selection of specific apparatus will be apparent to the artisan.

The reduced-menthofuran-content peppermint oil used in this invention is prepared by the process described in the co-pending European patent application of even date.

Generally, the reduced-menthofuran-content peppermint oil of the present invention has a menthofuran content, after treatment, below 2.0%, and preferably in the range from 0.8 to 2.0%, and more preferably in the range from 0.8% to 1.4%, by weight, all based on the weight of reduced-menthofuran-content peppermint oil. This amount of menthofuran is achieved by using from about 0.5% to about 15% by weight maleic anhydride by weight of starting peppermint oil to react with the menthofuran. It should be recognised that the exact amount of maleic anhydride employed will vary depending upon the menthofuran content of the starting oil and the degree of reduction in content of menthofuran desired.

In a preferred embodiment of the invention a starting peppermint oil containing menthofuran is admixed with the maleic anhydride and stirred to solubilize the maleic anhydride. The reaction between the menthofuran and the maleic anhydride commences almost instantaneously resulting in an exothermic reaction.

The temperature of the reaction admixture is preferably maintained in the range from 0°C to 80°C and more preferably in the range from 25°C to 50°C. Temperatures below 0°C tend to result in the gelation of the oil while temperatures above 80°C may cause accelerated oxidation and polymerization of the oil constituents. It should be recognized that the reaction is exothermic in nature and use of standard means to maintain the reaction temperature are contemplated to be used.

The reaction time is not critical and will vary depending upon the particular reaction temperature employed, faster reaction times occur at higher temperatures, and longer reaction times occur at lower temperatures. For commercial reasons the reaction time may vary from a few seconds up to 12 hours and preferably by up to 5 hours, although longer times (for example up to 4 weeks) at lower temperatures are useable.

Once the reaction is complete the menthofuran-maleic anhydride adduct is separated from the reduced-menthofuran-content peppermint oil.

Since the menthofuran-maleic anhydride adduct is crystalline in peppermint oil at temperatures below 5°C, separation is conveniently performed by lowering the temperature of the admixture to crystallize the menthofuran-maleic anhydride adduct. The resulting reduced-menthofuran content peppermint oil is then recovered by conventional solid-liquid separation means such as filtration or decantation, and then stored or used directly as a flavouring agent. When used as a flavouring agent, the peppermint oil may be used directly or blended with other flavouring agents, including treated or untreated peppermint oil. It has been found that acceptable peppermint oil flavour is obtained by using not only the reduced-menthofuran-content peppermint oil, but blends of the reduced-menthofuran-content oil with untreated oil in amounts of from 1 to 10 molar parts of reduced-menthofuran-content oil to 10 to 1 molar parts of untreated oil. The reason why such mixtures demonstrate acceptable flavouring is unknown but is believed to result from some anti-oxidative effect caused by the reduced-menthofuran-content peppermint oil.

In addition to use of the reduced-menthofuran-content peppermint oil described, it is also possible to use other secondary flavouring agents within the formulation of this invention. Such additional flavours should be compatible with the peppermint oil and not alter the stability of the peppermint oil.

The secondary flavouring agents useful to prepare the flavouring compositions of this invention may be derived from for example, synthetic flavour oils and/or oils derived from plants, leaves, flowers and fruits, and combinations thereof. Representative flavour oils include spearmint oil, cinnamon oil, and oil of wintergreen (methylsalicylate). Also useful are artificial, natural or synthetic fruit flavours, for example, citrus oils including lemon, orange, grape, lime, and grapefruit, and fruit essences, for example, apple, strawberry, cherry, or pineaplle.

The amount of secondary flavouring agent employed is normally a matter of preference subject to such factors as flavour type, base type and strength desired. In general, amounts of from 0.05% to 3.0% by weight of the final composition are useable with amounts of from 0.3% to 1.5% being preferred and from 0.8% to 1.2% being most preferred.

The reduced-menthofuran-content peppermint oil may be employed in the chewing gum or confectionery in either liquid form or dried form. When employed in the latter method, suitable drying means such as spray drying the oil or adsorption of the oil within an insoluble porous carrier such as polyethylene may be used. Alternatively, it may be adsorbed onto a water soluble material, for example, cellulose, starch, or sugar, The actual techniques for preparing such dried forms are well known and do not constitute a part of this invention.

The confectionery compositions of the present invention includes, for example, sugar and sugarless boiled candy, pressed tablets, toffee and nougat.

The reduced-menthofuran-content peppermint oil, used in the following Examples which demonstrate its use according to the present invention, was prepared by the following procedure.

Five hundred grams of Midwest peppermint oil (A.M. Todd Company, Kalamazoo, Michigan) containing 2.38% menthofuran was mixed with 10% by weight (50 gm.) maleic anhydride in a flask. The mixture was mechanically stirred for a total of 30 minutes at 28°C during which time a rise in temperature to 50°C was noted. The solution was then neutralized by washing with 100 grams of 10% $Na_2CO_3$ solution. The lower hydrous layer, which contained $Na_2CO_3$, sodium maleate, and water soluble impurities from the peppermint oil, was separated and discarded.

The reduced-menthofuran-content peppermint oil was recovered by distillation under vacuum using a nitrogen purging atmosphere. The distillation unit consisted of a boiling flask, two fractionation columns packed with Berl Saddles, two cold water condensers, a nitrogen embulator, and a graduated vacuum collector. The distillation temperature was maintained between 24° and 86°C in the pot with a vapour temperature around 57°C.

The yield of recovered product was 461.0 gms. The menthofuran content in the recovered reduced-menthofuran-content peppermint oil was 0.85% determined by capillary gas chromatography. A residue of 16.10 grams (3.00%), which contained some peppermint oil residue and the menthofuran-maleic anhydride adduct, remained in the distillation flask.

## EXAMPLE 1

This Example demonstrates use of various treated and untreated peppermint oils and mixtures thereof, in a chewing gum formulation having the following composition:

| Ingredient | % By Weight |
|---|---|
| Gum base | 21.0 |
| Corn syrup | 16.0 |
| Sugar | 55.45 |
| Glucose | 6.0 |
| Glycerin | 0.45 |
| Colour | 0.10 |
| Lecithin | 0.20 |
| Oil | 0.80 |

The particular peppermint oil was mixed in the gum formalation in an amount of 0.8% by weight.    The gum formulation was rolled and scored to prepare separate pieces for packaging having a dimension of 73mm (2,875 inches) x 19mm (0.75 inch) x 1.8mm (0.07 inch).

The pieces were individually packaged in foil and placed in an oven maintained at a temperature of 37°C for 6 weeks.

The gum samples were removed and subjected to flavour chew out studies by a 6 member test panel to determine the intensity of oxidative "off-note" product.

The chew out study results are set forth in Table 1 and show the unexpected stability achieved by using the novel reduced-menthofuran-content peppermint oil in a chewing gum formulation.

Independent of the chew out studies the amount of menthofuran present in the flavour oil after the 6 week incubation time was determined by gas chromotography.    The results are set forth in Table 2 which shows no oxidation of reduced-menthofuran-content peppermint oil whereas high amounts of oxidation are present in the untreated oil.

### Table 1

| Runs | Flavouring Description | Menthofuran Content (%) | Results |
|---|---|---|---|
| Comparative Run A | Standard un-treated midwest Peppermint oil | 2.38 | Oxidized, unacceptable taste |
| Inventive Run 1 | Reduced-mentho-furan-content peppermint oil | 0.85 | Minor oxidation, acceptable taste |
| Inventive Run 2 | Blend of 50% Run 1 and 50% Run A | 1.56 | Minor surface oxidation, acceptable taste |
| Inventive Run 3 | Blend of 60% Run 1 and 40% Run A | 1.40 | Minor surface oxidation, acceptable taste |

### Table 2

| Runs | Initial Menthofuran Content (%) | 6 week Menthofuran Content (%) | % Change in Menthofuran-Content |
|---|---|---|---|
| Comparative A | 2.38 | 2.24 | -5.90 |
| Inventive Run 1 | 0.85 | 0.85 | 0 |
| Inventive Run 2 | 1.56 | 1.47 | -3.30 |
| Inventive Run 3 | 1.40 | 1.35 | -3.50 |

### EXAMPLE 2

This Example demonstrates use of various peppermint oils in the chewing gum formulation of Example 1.

The peppermint oil was mixed in the gum formulation in an amount of 0.8% by weight.
The gum formulation was rolled, scored, packaged
and tested by the procedure described in Example
1.

The chew out studies are set forth in Table
3 and show the unexpected stability achieved
by using the novel reduced-menthofuran-content
peppermint oil in a chewing gum formulation.
The 6 test panelists found increased resistance
to oxidation in Inventive Example Run 4 but
preferred the flavour resulting from the blended
oil of Run 5.

### Table 3

| Runs | Flavouring Description | Menthofuran Content (%) | Results |
|------|------------------------|-------------------------|---------|
| Comparative Run B | Standard untreated midwest peppermint oil | 2.80 | Oxidized, unacceptable taste |
| Inventive Run 4 | Reduced-menthofuran-content peppermint oil | 0.85 | Minor oxidation, acceptable taste |
| Inventive Run 5 | Blend of 67% rectified peppermint oil and 33% Run 4 | 1.77 | Minor surface oxidation, acceptable taste |

### EXAMPLE 3

This Example demonstrates the preparation
of a sugarless gum containing the novel reduced-
menthofuran-content peppermint oi.

A flavoured chewing gum was prepared with
the following ingredients:

| Ingredient | % By Weight |
|------------|-------------|
| Gum base | 26.63 |
| Sorbitol solution | 12.10 |
| Sorbitol sweetener | 54.53 |
| Sodium saccharin | 0.10 |

| Ingredient | % By Weight |
|---|---|
| Glycerin | 5.04 |
| Flavour containing | 1.6 |

a)  45% reduced-mentofuran-content perppermint
    oil

b)  49% untreated peppermint oil

c)   6% artificial mal flavour

The peppermint oil flavouring agent was mixed in the gum formulation in an amount of 1.6% by weight.

When mixing was complete the chewing gum formulation was rolled, scored and prepared into separate pieces.

A chew out study was conducted with a multiple member test panel to determine the intensity of the product.   The panel results indicate that no oxidative "off-notes" were detected and the chewing gum had an acceptable taste.

### EXAMPLE 4

This Example demonstrates a "hard" tabletted confectionery containing the novel reduced-menthofuran-content peppermint oil.

The flavoured confectionery was prepared with the following ingredients:

| Ingredient | % By Weight |
|---|---|
| Crystalline sorbitol | 98.00 |
| Calcium phosphate (dibasic) | 0.50 |
| Magnesium stearate | 1.30 |
| Reduced-menthofuran-content peppermint oil | 0.20 |

The reduced-menthofuran-content peppermint oil flavouring agent was mixed with the previously heated and mixed base material at a temperature between 60°C and 80°C.   Mixing was conducted for several minutes whereupon the mixture was

0113989

extruded and pressed into flat level edged disc shaped tablets.  The tablets had a strong peppermint oil flavour, and firm texture.

0113989

CLAIMS: (for all designated States other than Austria):

1. A peppermint oil flavoured chewing gum or confectionery composition, which comprises: a base support medium and, incorporated within the base support medium, in the range from 0.01% to 5.0%, by weight of the final composition, of a reduced-menthofuran- content peppermint oil having a menthofuran content of below 2.0%, preferably in the range from 0.8% to 2%, more preferably 0.8% to 1.4%, by weight based on the weight of reduced-menthofuran-content peppermint oil.

2. A composition according to Claim 1, wherein the reduced-menthofuran-content peppermint oil is prepared by: reacting a starting peppermint oil with an amount of maleic anhydride in the range from 0.5% to 15% by weight, based on the weight of starting peppermint oil, to selectively form a menthofuran-maleic anhydride adduct without otherwise affecting the flavouring properties of the remaining peppermint oil constituents; and subsequently recovering the reduced-menthofuran-content peppermint oil.

3. A composition according to Claim 1 or 2, wherein the base support medium comprises a chewing gum base, preferably present to an extent in the range from 5% to 45%, more preferably 15% to 25%, by weight, based on the weight of the final composition.

4. A composition according to any one of Claims 1, 2 and 3, wherein the amount of reduced-menthofuran-content peppermint oil present is in the range from 0.1% to 2%, preferably 0.8% to 1.2%, by weight, based on the weight of the final composition.

5. A composition according to Claims 1 or 2, wherein the base support medium in the confectionery formulation comprises a sweetening material, preferably present to an extent in the range from 5% to 99% by weight, based on the weight of the final composition.

6. A composition according to Claim 5, wherein the amount of reduced-menthofuran-content peppermint oil present is in the range from 0.05% to 1% by weight, based on the weight of the final composition.

7. A process for producing a flavoured chewing gum which process comprises:

admixing, preferably at a temperature in the range from 70°C to 120°C, a chewing gum base with a reduced-menthofuran-content peppermint oil prepared by reacting a starting peppermint oil with an amount of maleic anhydride in the range from 0.5% to 15% by weight, based on the weight of starting peppermint oil, to selectively form a menthofuran-maleic anhydride adduct without otherwise affecting the flavouring properties of the remaining peppermint oil constituents and subsequently recovering the reduced-menthofuran-content peppermint oil;

continuing the mixing until a uniform mixture of gum base and flavouring is obtained; and

forming the mixture into suitable chewing gum shapes.

8. A process according to Claim 7, wherein the reduced-menthofuran-content peppermint oil is present to an extent in the range from 0.01% to 5%, preferably 0.1% to 2%, more preferably 0.8% to 1.2% by weight, based on the weight of the final composition ; and wherein the amount of chewing gum base is present to an extent in the range from 5% to 45% by weight, based on the weight of the final composition.

9. A process for producing a flavoured confectionery which process comprises:

making a confectionery base by heating and mixing together at an elevated temperature, the base support materials, and preferably one or more additives;

cooling and kneading the mixture to a temperature below 120°C;

admixing into the confectionery base an amount of reduced-menthofuran-content peppermint oil prepared by reacting a starting peppermint oil with an amount of maleic anhydride in the range from 0.5% to 15% by weight, based on the weight of starting peppermint oil, to selectively form a menthofuran-maleic anhydride adduct without otherwise affecting the flavouring properties of the remaining peppermint oil constituents and subsequently recovering the reduced-menthofuran-content peppermint oil; and

forming the resulting mixture into a suitable confectionery shape.

10. A process according to Claim 9, wherein the amount of reduced-menthofuran-content peppermint oil is present to an extent in the range from 0.01% to 5%, by weight, based on the weight of the final composition; and wherein the amount of base support material is present to an extent of in the range from 5% to 99% by weight, based on the weight of the final composition.